# DEMANDE DE BREVET EUROPEEN

(11) **EP 3 964 734 A1**
(43) Date de publication de la demande: **09.03.2022**
(21) Numéro de dépôt: 21191002.1
(22) Date de dépôt: 12.08.2021
(51) Int. Cl.: F16H 57/04, F16H 57/08, F16H 1/28, B64C 27/12

(54) **DISPOSITIF DE SEPARATION ET DE COLLECTE DE DEUX FLUX D'UN LIQUIDE DE LUBRIFICATION, TRAIN EPICYCLOÏDAL D'ENGRENAGES, BOITE DE TRANSMISSION DE PUISSANCE ET AERONEF**

(30) Priorité: 07.09.2020 FR 2009040
(71) Demandeur: Airbus Helicopters, 13725 Marignane Cedex (FR)
(72) Inventeur: CHARRIER, Mathieu, 13002 MARSEILLE (FR); LE RU, John, 13660 ORGON (FR); ESCOFFIER, Adrien, 13760 SAINT CANNAT (FR)
(74) Mandataire: GPI Brevets

(57) **Abrégé**

La présente invention concerne un dispositif de séparation et de collecte (40) de deux flux (51,52) d'un liquide de lubrification pour un train épicycloïdal d'engrenages (10) comportant une roue planétaire (11) dentée, une couronne externe (12) dentée, un porte-satellites (20), des roues-satellites (30) dentées portées par ledit porte-satellites (20). Ledit train épicycloïdal d'engrenages (10) est lubrifié par un circuit de lubrification (50) dirigeant un liquide de lubrification notamment vers un premier dispositif de guidage (25) en rotation dudit porte-satellites (20) et vers des seconds dispositifs de guidage (35) en rotation desdites roues-satellites (30). Le dispositif de séparation et de collecte (40) permet d'une part d'acheminer un premier flux (51) dudit liquide de lubrification vers lesdits seconds dispositifs de guidage (35) et d'autre part d'acheminer un deuxième flux (52) dudit liquide de lubrification s'écoulant par gravité dudit premier dispositif de guidage (25) entre deux roues-satellites (30) évitant de la sorte le mélange des deux flux (51,52).

## Description

La présente invention se situe dans le domaine de la lubrification des systèmes à engrenages, et notamment des boîtes de transmission de puissance d'un aéronef à voilure tournante.

La présente invention concerne un dispositif de séparation et de collecte de deux flux d'un liquide de lubrification destiné à un système mécanique lubrifié. La présente invention concerne également un train épicycloïdal d'engrenages à lubrification améliorée équipé d'un tel dispositif de séparation et de collecte, une boîte de transmission de puissance munie d'un tel train épicycloïdal d'engrenages ainsi qu'un aéronef muni d'une telle boîte de transmission de puissance.

Un système mécanique comporte généralement des éléments tournants, tels que des arbres et des roulements, ainsi que des éléments de transmission de puissance et de réduction ou d'augmentation d'une vitesse de rotation, tels que des pignons et/ou des engrenages. Il est alors essentiel pour le bon fonctionnement du système mécanique de lubrifier et de refroidir ces éléments par exemple par un liquide de lubrification tel que de l'huile. Cette lubrification est en général assurée par un circuit de lubrification et a pour fonctions principales de limiter l'usure et l'échauffement de ces éléments du système mécanique et, par suite, de prolonger la durée de vie du système mécanique. Sans une telle lubrification, le fonctionnement du système mécanique peut être rapidement dégradé, voire impossible. Cette lubrification contribue également à l'évacuation de particules métalliques issues de l'usure ou de la dégradation d'un élément du système mécanique.

Un système mécanique peut notamment comporter un train épicycloïdal d'engrenages permettant de fournir un grand rapport de démultiplication de la vitesse de rotation entre un arbre d'entrée et un arbre de sortie. Un tel système mécanique peut être par exemple une boîte de vitesse d'un véhicule, et par exemple d'un aéronef.

Un train épicycloïdal d'engrenages comporte classiquement une roue planétaire dentée, une couronne externe dentée, un porte-satellites et plusieurs roues dentées formant des roues-satellites qui sont portées par le porte-satellites. Les dents des roues-satellites sont en prise à la fois avec des dents de la roue planétaire et avec des dents de la couronne externe. Selon l'utilisation du train épicycloïdal d'engrenages, la roue planétaire, le porte-satellites ou la couronne externe sont solidaires de l'arbre d'entrée ou de l'arbre de sortie. Par exemple, la couronne externe peut être fixe, la roue planétaire étant solidaire de l'arbre d'entrée et le porte-satellites étant solidaire de l'arbre de sortie.

Le porte-satellites peut comporter un support portant des manetons. Les manetons et le support peuvent former une seule et même pièce ou bien les manetons peuvent être rapportés et fixés rigidement au support.

Un train épicycloïdal d'engrenages comporte aussi des dispositifs de guidage en rotation des différents éléments tournants, par exemple de la roue planétaire, du porte-satellites et des roues-satellites. Un dispositif de guidage en rotation peut par exemple comporter un palier lisse ou un ou plusieurs roulements à billes, à rouleaux ou encore à aiguilles.

Un train épicycloïdal d'engrenages est généralement lubrifié par un circuit de lubrification afin de limiter notamment l'échauffement et l'usure des éléments de denture et des dispositifs de guidage. Ce circuit de lubrification permet notamment d'acheminer un liquide de lubrification vers les zones et les éléments à lubrifier, en particulier les éléments de denture et les dispositifs de guidage. Un tel circuit de lubrification est ainsi intégré au système mécanique comportant le train épicycloïdal d'engrenages.

Cependant, l'architecture d'un train épicycloïdal d'engrenages et les niveaux de chargement importants qu'il peut subir imposent souvent une lubrification des dispositifs de guidage des roues-satellites depuis une bague intérieure par effet centrifuge. Le liquide de lubrification peut par exemple être dirigé dans chaque maneton supportant une roue-satellite et mis sous pression sous l'effet de la force centrifuge afin de traverser la bague intérieure pour lubrifier les éléments roulants du dispositif de guidage de cette roue-satellite.

En outre, lorsque le dispositif de guidage du porte-satellites est situé plus haut que les roues-satellites, le flux du liquide de lubrification s'écoule par gravité en traversant tout d'abord le dispositif de guidage du porte-satellites, et ensuite les dispositifs de guidage des roues-satellites. Ce flux du liquide de lubrification est susceptible d'être pollué.

Le liquide de lubrification peut aussi être dirigé vers les manetons à partir d'asperseurs ou de gicleurs fixes par rapport au bâti du système mécanique.

Un déflecteur peut être intégré au-dessus des dispositifs de guidage des roues-satellites dans le train épicycloïdal d'engrenages afin d'orienter le flux de liquide de lubrification vers les dispositifs de guidage des roues-satellites pour limiter la quantité de liquide de lubrification utilisé.

Par ailleurs, un système mécanique lubrifié peut comporter un dispositif de surveillance afin de surveiller l'état ou la qualité du liquide de lubrification, ainsi que la quantité de limailles et d'écailles métalliques qu'il contient.

Par exemple, le document US 2019/0383382 décrit un dispositif de surveillance de la lubrification d'un dispositif de transmission mécanique tel qu'une boîte de vitesse, un groupe motopropulseur par exemple. Ce dispositif de surveillance comporte plusieurs capteurs visant à mesurer notamment la température, la pression et le volume de liquide de lubrification dans le dispositif de transmission mécanique ainsi que la température d'un ou plusieurs composants de ce dispositif de transmission mécanique. De la sorte, ce dispositif de surveillance permet de détecter une dégradation de la fonction de la lubrification. Toutefois, ce dispositif de lubrification est uniquement un dispositif informatif, mais ne contribue pas à améliorer la circulation du liquide de lubrification, ni la lubrification du dispositif de transmission mécanique.

La présente invention a alors pour but de proposer un dispositif de séparation et de collecte de deux flux distincts d'un liquide de lubrification, par exemple pour un train épicycloïdal d'engrenages, qui soit simple et innovant, tendant à éviter une circulation de liquide de lubrification successivement dans plusieurs dispositifs de guidage en rotation voire à minimiser la quantité de liquide de lubrification nécessaire pour lubrifier efficacement le train épicycloïdal d'engrenages.

La présente invention a par exemple pour objet un dispositif de séparation et de collecte de forme annulaire collectant un premier flux et un deuxième flux d'un liquide de lubrification, le premier flux et le deuxième flux étant distinct.

Le deuxième flux peut par exemple s'écouler par gravité vers le dispositif de séparation et de collecte.

Le dispositif de séparation et de collecte selon l'invention est remarquable en ce qu'il comporte d'une part, un premier dispositif d'acheminement configuré pour acheminer le premier flux vers des dispositifs de guidage situés sous le dispositif de séparation et de collecte et d'autre part, un deuxième dispositif d'acheminement configuré pour diriger le deuxième flux en dehors des dispositifs de guidage.

De la sorte, le dispositif de séparation et de collecte selon l'invention permet d'une part de collecter le premier flux et le deuxième flux et d'autre part de diriger séparément et indépendamment, par l'intermédiaire respectivement du premier dispositif d'acheminement et du deuxième dispositif d'acheminement, le premier flux et le deuxième flux du liquide de lubrification vers des points différents. Le premier flux du liquide de lubrification peut ainsi être dirigé vers des éléments à lubrifier et à refroidir, en particulier vers des dispositifs de guidage en rotation situés en dessous du dispositif de séparation et de collecte. Le deuxième flux du liquide de lubrification peut quand à lui être dirigé vers d'autres points, en dehors de ces dispositifs de guidage en rotation, par exemple entre deux dispositifs de guidage en rotation adjacents parmi ces dispositifs de guidage situés en dessous du dispositif de séparation et de collecte.

Les termes « sous », « en dessous » et « au-dessus » s'entendent par rapport à un axe du dispositif de séparation et de collecte orienté du dispositif de séparation et de collecte vers les dispositifs de guidage en rotation. Cet axe du dispositif de séparation et de collecte peut être par exemple sensiblement parallèle à la direction de la gravité terrestre et être orienté verticalement vers le bas et, dans l'environnement d'un aéronef, lorsque cet aéronef est posé normalement au sol sur ses trains d'atterrissage. De même, le terme « verticale » s'entend selon cet axe du dispositif de séparation et de collecte, à savoir sensiblement parallèlement à la direction de la gravité terrestre lorsque cet aéronef est posé normalement au sol. En outre, les termes « supérieur » et « inférieur » s'entendent également par rapport à cet axe du dispositif de séparation et de collecte.

Un dispositif de guidage en rotation peut comporter un palier lisse ou un ou plusieurs roulements à billes, à rouleaux ou encore à aiguilles par exemple. Un dispositif de guidage en rotation comporte par exemple une bague intérieure, une bague extérieure et des éléments roulants entre la bague intérieure et la bague extérieure. Par souci de simplification, un tel dispositif de guidage en rotation est désigné plus simplement « dispositif de guidage » par la suite.

Le dispositif de séparation et de collecte selon l'invention est destiné à équiper un système mécanique lubrifié, par exemple un train épicycloïdal d'engrenages, afin d'améliorer sa lubrification.

Le premier flux peut être dirigé par gravité ou bien par injection ou pulvérisation vers le dispositif de séparation et de collecte selon l'invention. Le deuxième flux peut s'écouler par gravité vers le dispositif de séparation et de collecte selon l'invention. Le premier flux et le deuxième flux du liquide de lubrification peuvent être issus d'un même point de sortie d'un circuit de lubrification, par exemple par l'intermédiaire d'un dispositif de projection du liquide de lubrification, tel un orifice, un asperseur, un gicleur ou tout moyen équivalent. Le premier flux et le deuxième flux du liquide de lubrification peuvent aussi être issus de points de sortie distincts d'un circuit de lubrification, par exemple respectivement par l'intermédiaire de deux dispositifs de projection.

De plus, le deuxième flux peut traverser un autre dispositif de guidage situé au-dessus du dispositif de séparation et de collecte selon l'invention avant de s'écouler par gravité vers le dispositif de séparation et de collecte selon l'invention après avoir lubrifié cet autre dispositif de guidage. Le deuxième flux peut alors être pollué et comporter par exemple de la limaille et/ou des écailles métalliques issues de cet autre dispositif de guidage. Le dispositif de séparation et de collecte selon l'invention permet alors avantageusement d'acheminer respectivement le premier flux et le deuxième flux de liquide de lubrification sans que le deuxième flux ne pollue le premier flux avec cette limaille et/ou ces écailles métalliques, évitant ainsi de générer un risque de défaillance des dispositifs de guidage que le premier flux lubrifie. De plus, le deuxième flux peut être évacué sans traverser de dispositif de guidage vers un carter du système mécanique ou un réservoir, et éventuellement vers un dispositif de détection de la présence de particules polluantes, en particulier des particules métalliques.

Cette séparation des premier et deuxième flux de liquide de lubrification permet également d'éviter que la limaille et/ou des écailles métalliques présentes dans le deuxième flux soient bloqués dans leur cheminement, par exemple dans un dispositif de guidage, limitant alors leur détection par un dispositif de détection ou de surveillance éventuel. En effet, la présence de cette limaille et/ou ces écailles métalliques peut être représentative d'un défaut ou d'une défaillance d'un élément de denture ou d'un dispositif de guidage du système mécanique. De la sorte, le dispositif de séparation et de collecte selon l'invention contribue à une bonne détection de ce défaut ou de cette défaillance.

Enfin, le dispositif de séparation et de collecte selon l'invention permet d'optimiser la collecte du premier flux et du deuxième flux de liquide de lubrification afin notamment d'optimiser, voire de maximiser, la quantité de liquide de lubrification du premier flux acheminée vers les dispositifs de guidage situés en dessous du dispositif de séparation et de collecte selon l'invention. De la sorte, le dispositif de séparation et de collecte selon l'invention contribue à limiter la quantité de liquide lubrification non utilisée, et, de fait, à limiter avantageusement le volume de liquide de lubrification nécessaire pour la lubrification optimale du système mécanique muni du dispositif de séparation et de collecte selon l'invention.

Le dispositif de séparation et de collecte peut de plus comporter une ou plusieurs des caractéristiques qui suivent, prises seules ou en combinaison.

Selon un exemple, le deuxième dispositif d'acheminement peut comporter un premier déflecteur et des canaux, le premier déflecteur dirigeant le deuxième flux vers les canaux, les canaux étant configurés pour diriger le deuxième flux en dehors des dispositifs de guidage situés sous le dispositif de séparation et de collecte, par exemple entre deux dispositifs de guidage adjacents.

De la sorte, le premier déflecteur permet de collecter le deuxième flux de liquide de lubrification et de le diriger vers les canaux. De plus, le dispositif de séparation et de collecte peut être tournant et solidaire d'un élément tournant du système mécanique muni du dispositif de séparation et de collecte. Dès lors, la force centrifuge générée par la rotation du dispositif de séparation et de collecte peut contribuer à faciliter le cheminement du deuxième flux de liquide de lubrification vers les canaux.

Selon un exemple, le dispositif de séparation et de collecte selon l'invention pouvant être de forme annulaire autour d'un axe du dispositif de séparation et de collecte, les canaux peuvent être ménagés radialement autour de cet axe. De plus, lorsque le dispositif de séparation et de collecte est tournant, la force centrifuge générée par la rotation du dispositif de séparation et de collecte peut contribuer à faciliter le cheminement du deuxième flux de liquide de lubrification dans les canaux et, par suite, son évacuation.

Selon un exemple, le dispositif de séparation et de collecte peut comporter une face supérieure et une face inférieure, la face supérieure étant agencée au-dessus de la face inférieure, par exemple selon la direction de la gravité terrestre. Les canaux peuvent déboucher par au moins un orifice agencé sur la face inférieure du dispositif de séparation et de collecte ou bien déboucher radialement à l'extérieur du dispositif de séparation et de collecte. Une fois sorti des canaux, le deuxième flux du liquide de lubrification peut alors s'évacuer par gravité entre deux dispositifs de guidage adjacents. Le premier déflecteur est par exemple agencé au-dessus de la face supérieure et au-dessus des canaux, les canaux débouchant fluidiquement sur le premier déflecteur.

Selon un exemple, le dispositif de séparation et de collecte comportant une face supérieure et une face inférieure, les canaux peuvent comporter des rainures ménagées dans la face inférieure et ouvertes en dessous de ladite face inférieure. Le deuxième flux du liquide de lubrification peut alors s'évacuer de ces rainures par gravité entre deux dispositifs de guidage adjacents.

Selon un exemple, le dispositif de séparation et de collecte comportant une face supérieure et une face inférieure, la face supérieure étant agencée au-dessus de la face inférieure, le premier dispositif d'acheminement peut comporter un deuxième déflecteur et des trous, le deuxième déflecteur dirigeant le premier flux vers la face supérieure du dispositif de séparation et de collecte, les trous traversant le dispositif de séparation et de collecte de la face supérieure à la face inférieure. Le deuxième déflecteur est alors agencé au-dessus de la face supérieure.

De la sorte, le deuxième déflecteur permet de collecter le premier flux de liquide de lubrification dans un espace situé entre le deuxième déflecteur et la face supérieure, notamment sous l'effet de la force centrifuge lorsque le dispositif de séparation et de collecte est tournant, et de le diriger vers les trous. De plus, les trous débouchent sur la face inférieure du dispositif de séparation et de collecte respectivement au-dessus des dispositifs de guidage ou bien au-dessus d'un cercle formé par une bague intérieure que comportent ces dispositifs de guidage. Le premier flux du liquide de lubrification peut alors s'écouler par gravité au travers desdits trous vers les dispositifs de guidage afin de les lubrifier.

Les trous et les canaux sont ainsi agencés à des azimuts différents autour de l'axe du dispositif de séparation et de collecte selon l'invention. Les trous sont ainsi agencés à des azimuts correspondant aux dispositifs de guidage alors que les canaux sont agencés à des azimuts correspondant aux intervalles entre deux dispositifs de guidage adjacents. Les trous et les canaux peuvent être agencés de façon équirépartie en azimut autour de l'axe du dispositif de séparation et de collecte.

Selon un exemple, les trous peuvent être positionnés entre le premier déflecteur et le deuxième déflecteur. De la sorte, le premier flux de liquide de lubrification collecté par le deuxième déflecteur sur la face supérieure peut s'écouler au travers desdits trous.

Selon un exemple, les trous peuvent être agencés dans la face supérieure du dispositif de séparation et de collecte selon l'invention au moins en partie sous le deuxième déflecteur, parallèlement à l'axe du dispositif de séparation et de collecte. De la sorte, la quantité de liquide de lubrification s'écoulant par chaque trou lorsque le dispositif de séparation et de collecte est tournant, peut être optimisée. En effet, dans ce cas, la force centrifuge tend à diriger le premier flux contre le deuxième déflecteur.

Selon un exemple, le deuxième déflecteur peut être incliné par rapport à l'axe du dispositif de séparation et de collecte, vers cet axe du dispositif de séparation et de collecte en s'éloignant verticalement au-dessus de la face supérieure afin de collecter et de diriger au mieux le premier flux de liquide de lubrification.

La présente invention vise également un train épicycloïdal d'engrenages comportant une roue planétaire dentée, une couronne externe dentée, un porte-satellites et plusieurs roues-satellites dentées portées par le porte-satellites, le porte-satellites comportant un support et plusieurs manetons portés par le support, chaque roue-satellite étant agencée autour d'un maneton, le train épicycloïdal d'engrenages comportant un premier dispositif de guidage en rotation du porte-satellites et des seconds dispositifs de guidage en rotation des roues-satellites. Les axes de rotation des dispositif de guidage en rotation étant positionnés sensiblement verticalement, à savoir parallèlement à la direction de la gravité terrestre, le premier dispositif de guidage est positionné dans un plan supérieur situé au-dessus d'un plan inférieur contenant les roues-satellites, le train épicycloïdal d'engrenages étant configuré pour être lubrifié par un premier flux et un deuxième flux d'un liquide de lubrification provenant d'un circuit de lubrification et se dirigeant en direction du premier dispositif de guidage et en direction des seconds dispositifs de guidage. Le premier flux et le deuxième flux sont ainsi distincts.

Le train épicycloïdal d'engrenages selon l'invention est remarquable en ce qu'il comporte un dispositif de séparation et de collecte tel que précédemment décrit, le premier flux du liquide de lubrification se dirigeant en direction des seconds dispositifs de guidage et le deuxième flux du liquide de lubrification s'écoulant par gravité du premier dispositif de guidage.

Selon un exemple, le premier dispositif d'acheminement achemine le premier flux au-dessus de chaque maneton afin de lubrifier chaque second dispositif de guidage alors que le deuxième dispositif d'acheminement dirige le deuxième flux entre deux roues-satellites adjacentes, et de fait en dehors des manetons et des seconds dispositifs de guidage. Les trous du premier dispositif d'acheminement débouchent alors sur la face inférieure du dispositif de séparation et de collecte au-dessus des manetons de sorte que le premier flux s'écoule par gravité dans les manetons.

Selon un exemple, le dispositif de séparation et de collecte est porté par le porte-satellites et solidaire en rotation du porte-satellites.

Selon un exemple, le train épicycloïdal d'engrenages comportant un axe de rotation d'au moins deux éléments parmi la roue planétaire, la couronne externe dentée et le porte-satellites, le dispositif de séparation et de collecte est centré sur l'axe de rotation. L'axe du dispositif de séparation et de collecte est ainsi sensiblement confondu avec cet axe de rotation, le porte-satellites et le dispositif de séparation et de collecte étant coaxiaux.

Les axes de rotation de la roue planétaire, de la couronne externe dentée et/ou du porte-satellites sont parallèles à l'axe de rotation du premier dispositif de guidage en rotation du porte-satellites et aux axes de rotation des seconds dispositifs de guidage en rotation des roues-satellites.

Ces différents axes de rotation du train épicycloïdal d'engrenages peuvent être verticaux. Dans ce cas, les différents flux du liquide de lubrification s'écoulent dans le train épicycloïdal d'engrenages principalement par gravité ou grâce à la force centrifuge générée par la rotation des composants de ce train épicycloïdal d'engrenages. Le liquide de lubrification peut être introduit dans le train épicycloïdal d'engrenages par gravité ou par l'intermédiaire d'un injecteur pulvérisant le liquide de lubrification.

Les différents axes de rotation du train épicycloïdal d'engrenages peuvent aussi être horizontaux. Dans ce cas, les différents flux du liquide de lubrification s'écoulent dans le train épicycloïdal d'engrenages principalement grâce à la force centrifuge générée. Le liquide de lubrification est alors injecté dans le train épicycloïdal d'engrenages par l'intermédiaire d'un injecteur pulvérisant le liquide de lubrification.

Les différents axes de rotation du train épicycloïdal d'engrenages peuvent aussi une orientation quelconque, les différents flux du liquide de lubrification s'écoulant dans le train épicycloïdal d'engrenages par gravité et/ou grâce à la force centrifuge. Le liquide de lubrification est de préférence injecté dans le train épicycloïdal d'engrenages par l'intermédiaire d'un injecteur pulvérisant le liquide de lubrification.

La présente invention vise aussi une boîte de transmission de puissance comportant un train épicycloïdal d'engrenages et un circuit de lubrification, le train épicycloïdal d'engrenages étant tel que précédemment décrit. Le circuit de lubrification distribue le premier flux et le deuxième flux de liquide de lubrification sur le train épicycloïdal d'engrenages, le premier flux étant dirigé vers les seconds dispositifs de guidage via le dispositif de séparation et de collecte et le deuxième flux étant dirigé vers le premier dispositif de guidage.

En outre, la boîte de transmission de puissance peut comporter un bâti, le premier dispositif de guidage étant agencé entre le bâti et le porte-satellites, le bâti comportant un conduit à travers lequel est acheminé le premier flux du liquide de lubrification en direction des seconds dispositifs de guidage via le dispositif de séparation et de collecte.

La présente invention vise enfin un aéronef comportant une boîte de transmission de puissance telle que précédemment décrite.

L'invention et ses avantages apparaîtront avec plus de détails dans le cadre de la description qui suit avec des exemples donnés à titre illustratif en référence aux figures annexées qui représentent :
- la figure 1, une vue schématique de côté d'un aéronef,
- la figure 2, une vue de dessus d'un train épicycloïdal d'engrenages d'un système mécanique,
- les figures 3 et 4, deux vues en coupe d'un train épicycloïdal d'engrenages muni d'un dispositif de séparation et de collecte de deux flux d'un liquide de lubrification,
- les figures 5 à 7, différentes vues d'un dispositif de séparation et de collecte, et
- les figures 8 et 9, deux vues en coupe d'un train épicycloïdal d'engrenages muni d'un dispositif de séparation et de collecte.

Les éléments présents dans plusieurs figures distinctes sont affectés d'une seule et même référence.

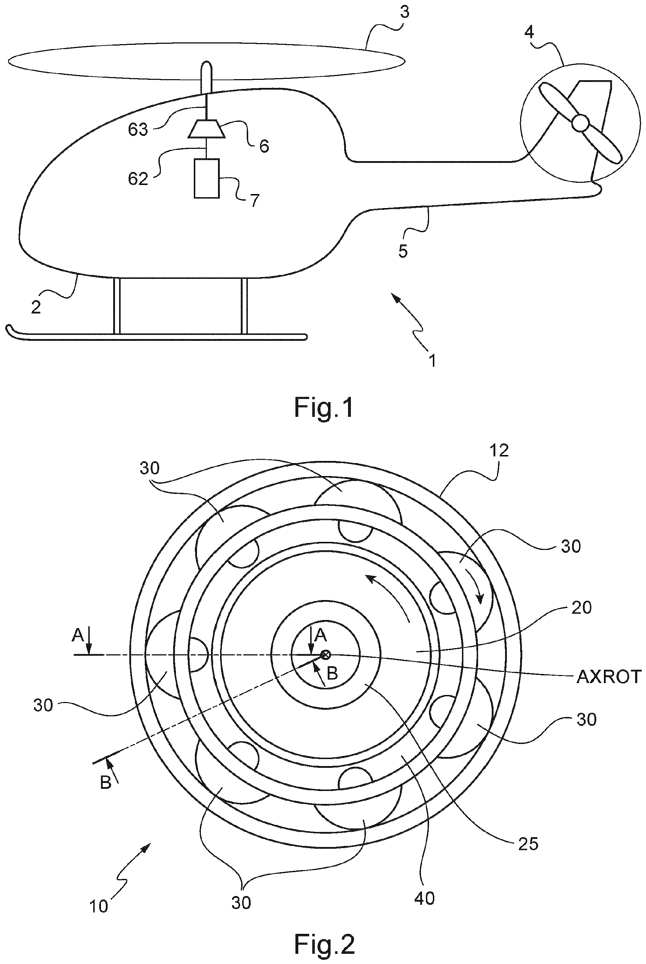

[Fig 1] Selon la figure 1, un aéronef 1 à voilure tournante de type giravion comporte un fuselage 2, un rotor principal 3 participant au moins partiellement à la sustentation de l'aéronef 1 et éventuellement un rotor auxiliaire 4 agencé à l'extrémité d'une poutre de queue 5. L'aéronef 1 comporte également une boîte de transmission de puissance 6 entraîné en rotation par une installation motrice 7 munie d'au moins un moteur.

La boîte de transmission de puissance 6 comporte d'une part, au moins un arbre d'entrée 62 relié à l'installation motrice 7 et d'autre part, un arbre de sortie 63 relié au rotor principal 3 par l'intermédiaire d'un mât rotor afin de mettre en rotation le rotor principal 3. Un arbre de sortie (non représenté) de la boîte de transmission de puissance 6 peut aussi être relié au rotor auxiliaire 4 par exemple par l'intermédiaire d'un arbre de transmission afin de mettre en rotation le rotor auxiliaire 4. La boîte de transmission de puissance 6 comporte des arbres et des roulements, ainsi que des pignons et des engrenages.

[Fig 2] En particulier et tel que représenté à la figure 2, la boîte de transmission de puissance 6 comporte d'un train épicycloïdal d'engrenages 10 permettant d'obtenir un rapport important de démultiplication de vitesse de rotation entre l'arbre d'entrée 62 et l'arbre de sortie 63.

La boîte de transmission de puissance 6 comporte aussi un circuit de lubrification 50 destiné à lubrifier et à refroidir les éléments tournants de la boîte de transmission de puissance 6 en utilisant un liquide de lubrification tel que de l'huile. La boîte de transmission de puissance 6 constitue ainsi un système mécanique lubrifié.

Un train épicycloïdal d'engrenages 10 peut être agencé par exemple dans la boîte de transmission de puissance 6 d'un aéronef 1. Un train épicycloïdal d'engrenages 10 peut également être agencé dans d'autres systèmes mécaniques lubrifiés.

Le train épicycloïdal d'engrenages 10 comporte une roue planétaire 11 dentée, une couronne externe 12 dentée, un porte-satellites 20 et plusieurs roues-satellites 30 dentées portées par le porte-satellites 20.

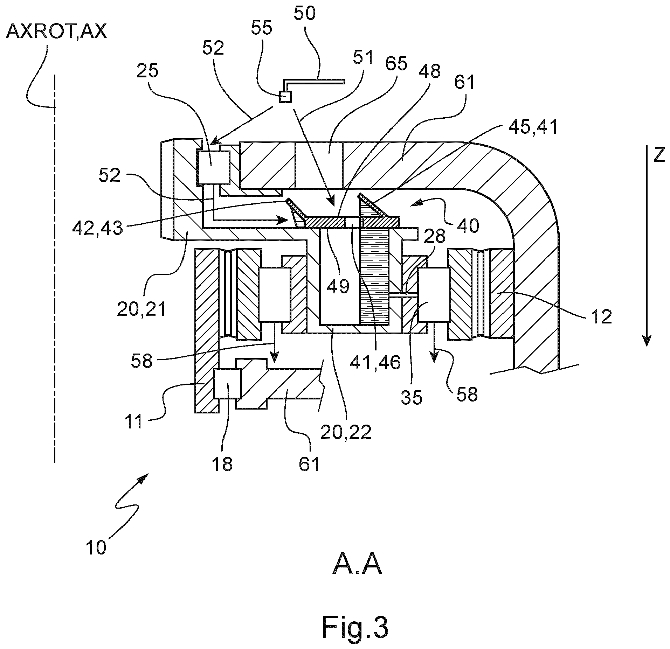

[Fig 3] La figure 3 présente le train épicycloïdal d'engrenages 10 illustré sur la figure 2 selon un premier plan de coupe radial AA. Le premier plan de coupe radial AA passe par un axe de rotation d'une roue-satellite 30.

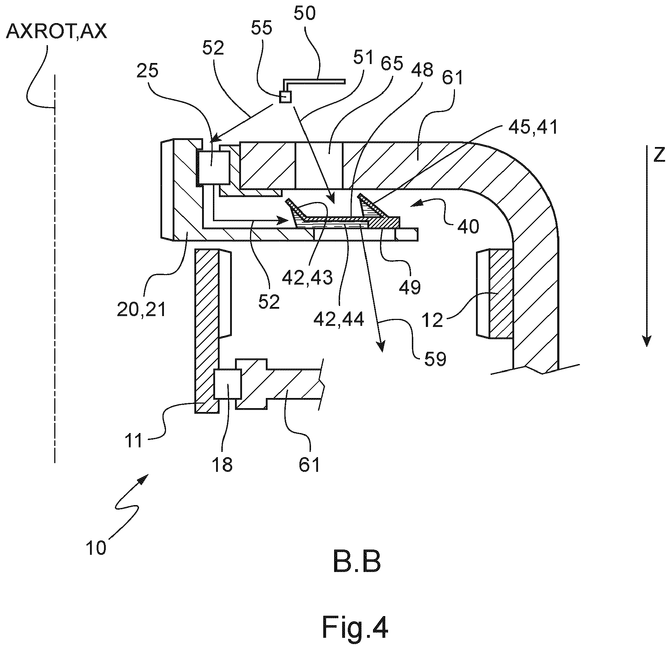

[Fig 4] La figure 4 présente une autre vue en coupe de ce train épicycloïdal d'engrenages 10 selon un second plan de coupe radial BB également illustré sur la figure 2. Le second plan de coupe radial BB est situé entre deux roues-satellites 30 adjacentes et est sensiblement à équidistance des deux roues-satellites 30 adjacentes.

Le porte-satellites 20 est par exemple solidaire de l'arbre de sortie 63 et la roue planétaire 11 peut être solidaire de l'arbre d'entrée 62 ou bien être solidaire d'un arbre intermédiaire relié à l'arbre d'entrée 62 par des pignons et des engrenages. La couronne externe 12 est fixe par rapport à la boîte de transmission de puissance 6 et solidaire d'un bâti 61 de la boîte de transmission de puissance 6.

Le porte-satellites 20 comporte un support 21 et plusieurs manetons 22 portés par le support 21. Le porte-satellites 20 est guidé en rotation par rapport au bâti 61 par un premier dispositif de guidage 25. Chaque roue-satellite 30 est agencée autour d'un maneton 22 et guidée en rotation autour d'un maneton 22 par un second dispositif de guidage 35. La roue planétaire 11 est guidée en rotation par rapport au bâti 61 par un troisième dispositif de guidage 18. Chaque dispositif de guidage 18, 25, 35 peut comporter un palier lisse ou un ou plusieurs roulements à billes, à rouleaux ou encore à aiguilles par exemple.

La roue planétaire 11 et le porte-satellites 20 sont agencés, selon cet exemple, mobiles en rotation autour d'un axe de rotation AXROT. De plus, la roue planétaire 11, la couronne externe 12 et le porte-satellites 20 sont coaxiaux selon cet axe de rotation AXROT. Chaque roue-satellite 30 comporte des dents coopérant avec des dents de la couronne externe 12 et des dents de la roue planétaire 11. Lorsque l'aéronef 1 est posé sur un sol plat sur ses trains d'atterrissage, cet axe de rotation AXROT est orienté sensiblement verticalement dans un repère terrestre, à savoir parallèlement à la direction Z de la gravité terrestre.

Quel que soit l'implantation du train épicycloïdal d'engrenages 10, le circuit de lubrification 50 de la boîte de transmission de puissance 6 a notamment pour fonction de lubrifier le train épicycloïdal d'engrenages 10 par l'intermédiaire d'un liquide de lubrification. En particulier, le circuit de lubrification 50 permet de lubrifier les seconds dispositifs de guidage 35 par l'intermédiaire d'un premier flux 51 du liquide de lubrification et le premier dispositif de guidage 25 par l'intermédiaire d'un deuxième flux 52 du liquide de lubrification.

Le train épicycloïdal d'engrenages 10 comporte également un dispositif de séparation et de collecte 40 de forme annulaire autour d'un axe AX.

Le dispositif de séparation et de collecte 40 est par exemple porté par le porte-satellites 20 et est solidaire en rotation du porte-satellites 20. Plus précisément, le dispositif de séparation et de collecte 40 illustré est porté par le support 21 du porte-satellites 20 et situé au moins partiellement au-dessus des manetons 22 et, de fait, au moins partiellement au-dessus des seconds dispositifs de guidage 35. De plus, la forme annulaire du dispositif de séparation et de collecte 40 est centrée sur l'axe de rotation AXROT, le porte-satellites 20 et le dispositif de séparation et de collecte 40 étant coaxiaux, l'axe AX et l'axe de rotation AXROT étant confondus.

Le dispositif de séparation et de collecte 40 comporte d'une part, un premier dispositif d'acheminement 41 configuré pour collecter et acheminer le premier flux 51 vers les seconds dispositifs de guidage 35 situés sous le dispositif de séparation et de collecte 40 et d'autre part, un deuxième dispositif d'acheminement 42 configuré pour collecter et diriger le deuxième flux 52 s'écoulant par gravité à partir du premier dispositif de guidage 25 en dehors des seconds dispositifs de guidage 35, à savoir entre deux seconds dispositifs de guidage 35 adjacents et entre deux roues-satellites 30 adjacentes.

Un premier exemple d'un dispositif de séparation et de collecte 40 est représenté sur les figures 2, 3 et 4.

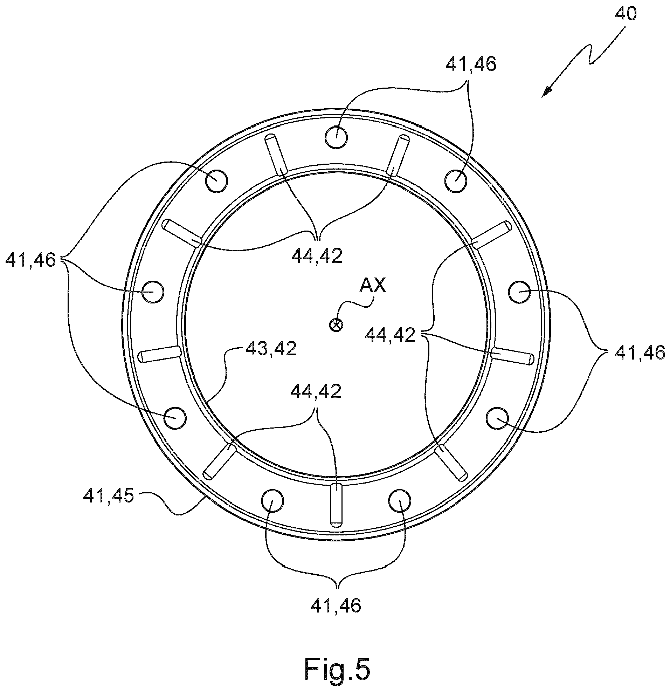

[Fig 5] Un deuxième exemple d'un dispositif de séparation et de collecte 40 est représenté seul sur la figure 5.

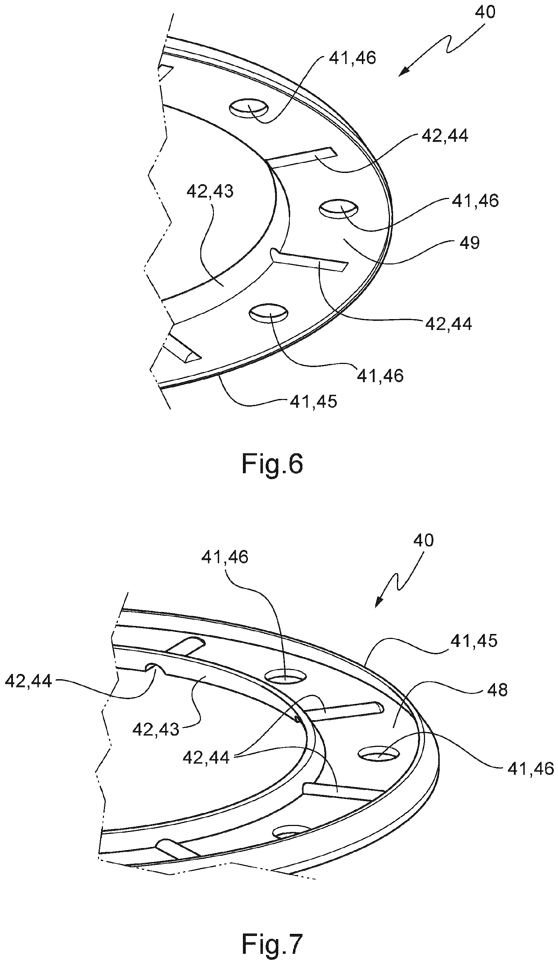

[Fig 6] La figure 6 représente une vue partielle en perspective d'une face inférieure 49 de ce deuxième exemple d'un dispositif de séparation et de collecte 40.

[Fig 7] La figure 7 représente une vue partielle en perspective d'une face supérieure 48 de ce deuxième exemple d'un dispositif de séparation et de collecte 40.

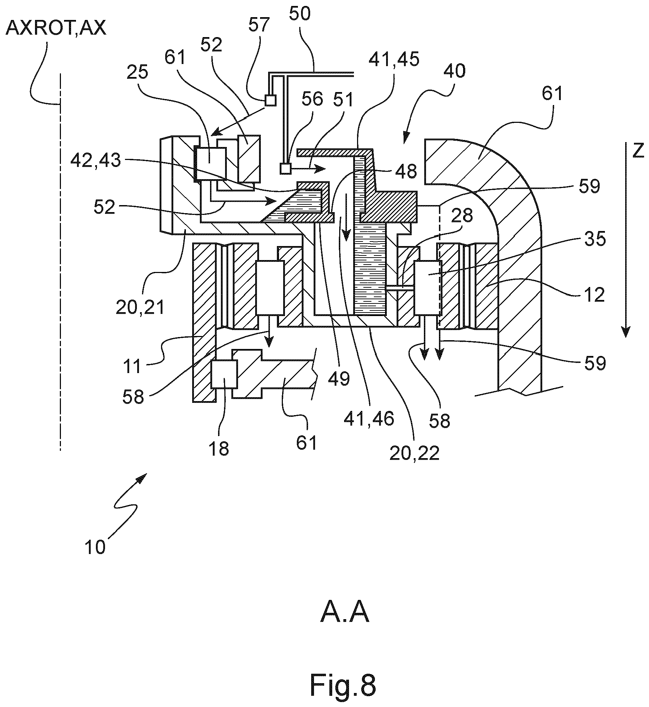

[Fig 8] Un troisième exemple d'un dispositif de séparation et de collecte 40 est représenté sur la figure 8 avec un train épicycloïdal d'engrenages 10 en coupe selon le premier plan de coupe radial AA.

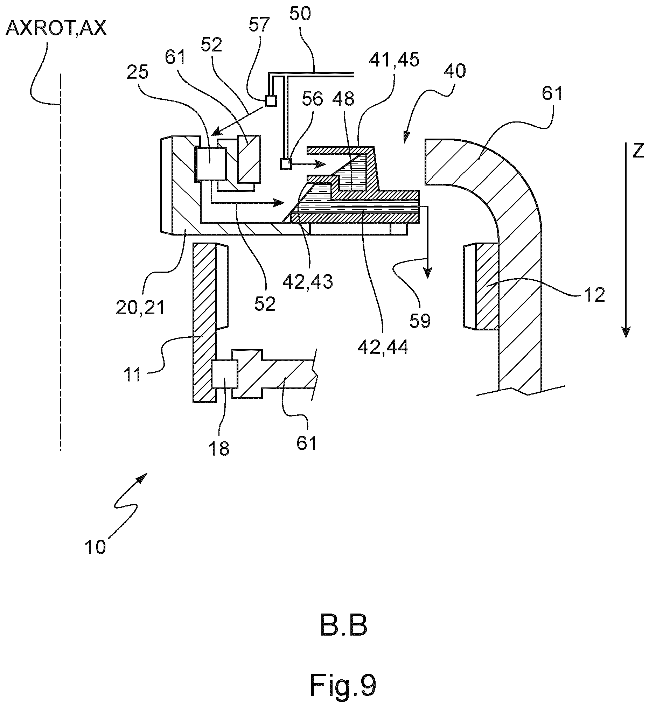

[Fig 9] La figure 9 représente une vue en coupe de ce troisième exemple d'un dispositif de séparation et de collecte 40 et du train épicycloïdal d'engrenages 10 selon le second plan de coupe radial BB.

De façon commune à ces exemples, un dispositif de séparation et de collecte 40 comporte un premier déflecteur 43, un deuxième déflecteur 45, des canaux 44 et des trous 46, ainsi qu'une face supérieure 48 et une face inférieure 49. La face supérieure 48 est située au-dessus de la face inférieure 49 selon la direction Z de la gravité terrestre. La face supérieure 48 est située entre le premier déflecteur 43 et le deuxième déflecteur 45. La face supérieure 48 et la face inférieure 49 peuvent ainsi former un anneau plat agencé entre le premier déflecteur 43 et le deuxième déflecteur 45. Les trous 46 traversent le dispositif de séparation et de collecte 40 de la face supérieure 48 à la face inférieure 49, et donc traverser l'anneau plat, de sorte à déboucher sur la face inférieure 49 au-dessus d'un maneton 22. Au moins un trou 46 débouche sur la face inférieure 49 au-dessus de chaque maneton 22. Chaque canal 44 débouche d'une part au niveau du premier déflecteur 43 et d'autre part entre deux roues-satellites 30 adjacentes.

Le premier dispositif d'acheminement 41 comporte le deuxième déflecteur 45 et les trous 46. Le deuxième déflecteur 45 permet de collecter, puis de diriger le premier flux 51 vers la face supérieure 48, puis vers les trous 46 sous l'effet de la force centrifuge générée par la rotation du porte-satellites 20 et sous l'effet de la gravité terrestre. Le premier flux 51 de liquide de lubrification peut ainsi être collecté dans un espace situé entre la face supérieure 48 et le deuxième déflecteur 45 sous l'effet de cette force centrifuge avant de s'écouler sous l'effet de la gravité terrestre dans chaque maneton 22 par l'intermédiaire des trous 46. Ensuite, le premier flux 51 est acheminé sous l'effet de la force centrifuge générée par la rotation du porte-satellites 20 vers chaque second dispositif de guidage 35 par l'intermédiaire d'un ou plusieurs orifices radiaux 28 présents dans chaque maneton 22. Enfin, le liquide de lubrification s'écoule, après avoir traversé un second dispositif de guidage 35, vers un réservoir, et éventuellement vers un dispositif de détection de la présence de particules polluantes sous la forme d'un premier flux de retour 58. En effet, ce premier flux de retour 58 peut comporter des particules métalliques issues de l'usure ou de la dégradation d'un second dispositif de guidage 35 et contribue alors à l'évacuation de ces particules métalliques.

Chaque trou 46 peut être agencé en azimut autour de l'axe AX de sorte à déboucher sur la face inférieure 49 sensiblement au-dessus du centre d'un maneton 22. Les trous 46 peuvent être agencés de façon régulière en azimut autour de l'axe AX.

Le deuxième dispositif d'acheminement 42 comporte le premier déflecteur 43 et les canaux 44. Les canaux 44 débouchent fluidiquement sur le premier déflecteur 43. Le premier déflecteur 43 permet de collecter, puis de diriger le deuxième flux 52 vers les canaux 44 sous l'effet de la force centrifuge. Le deuxième flux 52 de liquide de lubrification peut ainsi être collecté dans un espace en contact avec le premier déflecteur 43 et radialement en amont de ce premier déflecteur 43, avant d'être évacué par l'intermédiaire des canaux 44 sous l'effet de la force centrifuge et de s'écouler sous l'effet de la gravité terrestre entre deux roues-satellites 30 adjacentes et donc en dehors des seconds dispositifs de guidage 35 situés sous le dispositif de séparation et de collecte 40, évitant ainsi que le premier flux 51 ne se dirige vers les seconds dispositifs de guidage 35. Le liquide de lubrification s'écoule des canaux 44 en dehors des seconds dispositifs de guidage 35 vers un réservoir, et éventuellement vers un dispositif de détection de la présence de particules métalliques sous la forme d'un deuxième flux de retour 59. Ce deuxième flux de retour 58 peut aussi comporter des particules métalliques issues de l'usure ou de la dégradation du premier dispositif de guidage 25 et contribue alors à l'évacuation de ces particules métalliques.

Les canaux 44 peuvent être ménagés radialement autour de l'axe AX afin d'optimiser l'évacuation du deuxième flux 52 par ces canaux 44 sous l'effet de la force centrifuge. De plus, chaque canal 44 peut être agencé en azimut autour de l'axe AX de sorte à être sensiblement à équidistance de deux roues-satellites 30 adjacentes. Les canaux 44 peuvent être agencés de façon régulière en azimut autour de l'axe AX.

Le premier déflecteur 43 peut également contribuer à la séparation du premier flux 51 et du deuxième flux 52 et garantir ainsi que le premier flux 51 n'est pas pollué par le deuxième flux 52 et de la limaille et/ou d'éventuelles écailles métalliques provenant du premier dispositif de guidage 25 via le deuxième flux 52.

En outre, le premier déflecteur 43 peut aussi contribuer à collecter et à diriger le premier flux 51 vers la face supérieure 48 et vers les trous 46.

Le premier déflecteur 43 et le deuxième déflecteur 45 peuvent être inclinés par rapport à l'axe AX du dispositif de séparation et de collecte 40 afin de faciliter la collecte de chaque flux 51,52. Le premier déflecteur 43 et le deuxième déflecteur 45 sont par exemple inclinés vers le haut et vers l'axe AX en partant de la face supérieure 48 comme représentés sur les figures 3 à 7.

Le premier déflecteur 43 et le deuxième déflecteur 45 peuvent aussi être agencé de sorte à collecter et à canaliser le premier flux 51 entre le premier déflecteur 43 et le deuxième déflecteur 45 jusqu'à la face supérieure 48 et aux trous 46. Le premier déflecteur 43 et le deuxième déflecteur 45 ont par exemple des sections radiales en forme de « L » inversé, comme représenté sur les figures 8 et 9. De la sorte, le premier déflecteur 43 et le deuxième déflecteur 45 forment un collecteur annulaire coudé collectant et acheminant le premier flux 51 de liquide de lubrification jusqu'aux trous 46 percés sur la face supérieure 48 entre le premier déflecteur 43 et le deuxième déflecteur 45.

Les canaux 44 peuvent comporter des rainures radiales ménagées dans la face inférieure 48 de l'anneau plat du dispositif de séparation et de collecte 40 comme représentées sur les figures 4 à 7. Les canaux 44 sont ainsi ouverts en dessous de la face inférieure 48 de sorte que le deuxième flux 52 circulant sous l'anneau plat dans les rainures s'évacue par gravité entre deux roues-satellites 30 adjacentes. Les rainures sont par exemple obtenues par emboutissage, moulage ou usinage.

Les canaux 44 peuvent aussi comporter des conduites ménagées dans le dispositif de séparation et de collecte 40, à savoir entre la face supérieure 48 et une face inférieure 49, et débouchant radialement du dispositif de séparation et de collecte 40 comme représentées sur la figure 9. Les canaux 44 sont ainsi ouverts d'une part au niveau du premier déflecteur 43 et d'autre part au-delà du support 22 de sorte que le deuxième flux 52 circule dans les conduites depuis le premier déflecteur 43 jusqu'à être évacué entre deux roues-satellites 30 adjacentes.

Les trous 46 sont de préférence orientés verticalement entre la face supérieure 48 et la face inférieure 49, à savoir parallèlement à l'axe AX. Toutefois, les trous 46 peuvent être inclinés par rapport à cet axe AX.

Les positions des trous 46 peuvent être adaptées en fonction de la forme et des dimensions du deuxième déflecteur 45 et éventuellement de la vitesse de rotation du porte-satellites 20 supportant le dispositif de séparation et de collecte 40. En effet, selon la forme et les dimensions du deuxième déflecteur 45, l'espace situé entre la face supérieure 48 et le deuxième déflecteur 45 permet de collecter une quantité plus ou moins importante de liquide de lubrification provenant du premier flux 51. En outre, les dimensions du deuxième déflecteur 45 et les positions des trous 46 peuvent ainsi être modifiées et adaptées en fonction de l'intensité de la force centrifuge générée par la rotation du porte-satellites 20.

Par exemple, les trous 46 peuvent être positionnés entre le premier déflecteur 43 et le deuxième déflecteur 45 comme représentés sur les figures 5 à 7.

Les trous 46 peuvent aussi être agencés sur la face supérieure 48 au moins en partie sous le deuxième déflecteur 45 selon la direction Z de la gravité terrestre comme représentés sur la figure 3 afin d'optimiser l'alimentation de chaque maneton 22 avec le premier flux 51.

Grâce au dispositif de séparation et de collecte 40, le premier dispositif d'acheminement 41 permet ainsi avantageusement d'acheminer indépendamment le premier flux 51 et le deuxième flux 52 de liquide de lubrification vers leurs destinations respectives, à savoir le premier flux 51 au-dessus de chaque maneton 22 afin de lubrifier chaque second dispositif de guidage 35, et le deuxième flux 52 entre des roues-satellites 30 adjacentes évitant ainsi que ce deuxième flux 52 ne s'écoule sur les seconds dispositifs de guidage 35.

Par ailleurs, le premier flux 51 et le deuxième flux 52 du liquide de lubrification peuvent être distribués par un même dispositif de projection 55 du circuit de lubrification 50, comme représenté sur les figures 3 et 4. Dans ce cas, le dispositif de projection 55 est positionné au-dessus du bâti 61 pour pouvoir diriger le deuxième flux 52 du liquide de lubrification en direction du premier dispositif de guidage 25. Le bâti 61 comporte alors des conduits 65 traversant le bâti 61 sensiblement verticalement entre le dispositif de projection 55 et les seconds dispositifs de guidage 35 afin que le premier flux 51 du liquide de lubrification puisse se diriger vers les seconds dispositifs de guidage 35.

Le premier flux 51 et le deuxième flux 52 du liquide de lubrification peuvent également être distribués par des points de projection 56, 57 distincts du circuit de lubrification 50, comme représentés sur les figures 8 et 9. Les points de projection 56, 57 peuvent alors être situés respectivement au plus près du premier dispositif de guidage 25 et des seconds dispositifs de guidage 35, voire du dispositif de séparation et de collecte 40 pour le point de projection 56 distribuant le premier flux 51.

Dans les deux cas, le deuxième flux 52 traverse le premier dispositif de guidage 25 et s'écoule ensuite par gravité en dessous de ce premier dispositif de guidage 25 avant de se diriger vers le dispositif de séparation et de collecte 40 sous l'effet de la force centrifuge générée par la rotation du porte-satellites 20.

En particulier, lorsque le premier flux 51 et le deuxième flux 52 du liquide de lubrification sont distribués par les deux points de projection 56, 57 distincts du circuit de lubrification 50, le premier déflecteur 43 et le deuxième déflecteur 45 peuvent être adaptés, comme représentés sur les figures 8 et 9, au point de projection 56 distribuant le premier flux 51 de sorte à maximiser la quantité de liquide de lubrification du premier flux 51 collecté et dirigé vers les seconds dispositifs de guidage 35.

Par exemple, le premier déflecteur 43 et le deuxième déflecteur 45 peuvent avoir des sections radiales en forme de « L » inversé, de sorte que le premier déflecteur 43 et le deuxième déflecteur 45 forment un collecteur annulaire coudé dont une entrée est agencée à proximité des points de projection 56 du circuit de lubrification 50. Ainsi, une quantité maximale du premier flux 51, voire la totalité du premier flux 51, est collecté et acheminé entre le premier déflecteur 43 et le deuxième déflecteur 45 jusqu'aux trous 46.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de séparation et de collecte (40) de forme annulaire collectant un premier flux (51) et un deuxième flux (52) d'un liquide de lubrification, ledit premier flux (51) et ledit deuxième flux (52) étant distincts,,
**caractérisé en ce que** ledit dispositif de séparation et de collecte (40) comporte un axe (AX), une face supérieure (48) et une face inférieure (49), ladite face supérieure (48) étant agencée au-dessus de ladite face inférieure (49) selon ledit axe (AX), un premier dispositif d'acheminement (41) configuré pour acheminer ledit premier flux (51) vers des dispositifs de guidage (35) en rotation situés sous ledit dispositif de séparation et de collecte (40) selon ledit axe (AX) et un deuxième dispositif d'acheminement (42) configuré pour diriger ledit deuxième flux (52) en dehors desdits dispositifs de guidage (35) en rotation, ledit deuxième dispositif d'acheminement (42) comportant un premier déflecteur (43) et des canaux (44), lesdits canaux (44) débouchant sur le premier déflecteur (43) et comportant des rainures ménagées dans ladite face inférieure (49), ledit premier déflecteur (43) dirigeant le deuxième flux (52) vers lesdits canaux (44), lesdits canaux (44) étant configurés pour diriger ledit deuxième flux (52) en dehors desdits dispositifs de guidage (35) en rotation, ledit premier dispositif d'acheminement (41) comportant un deuxième déflecteur (45) et des trous (46), ledit deuxième déflecteur (45) dirigeant le premier flux (51) vers ladite face supérieure (48) dudit dispositif de séparation et de collecte (40), lesdits trous (46) traversant ledit dispositif de séparation et de collecte (40) de ladite face supérieure (48) à ladite face inférieure (49).

2. Dispositif de séparation et de collecte (40) selon la revendication 1,
**caractérisé en ce que** ledit dispositif de séparation et de collecte (40) étant de forme annulaire autour d'un axe (AX) dudit dispositif de séparation et de collecte (40), lesdits canaux (44) sont ménagés radialement autour dudit axe (AX).

3. Dispositif de séparation et de collecte selon la revendication 2,
**caractérisé en ce que** lesdits trous (46) et lesdits canaux (44) sont agencés à des azimuts différents autour dudit axe (AX).

4. Dispositif de séparation et de collecte selon l'une quelconque des revendications 1 à 4,
**caractérisé en ce que** lesdits canaux (44) sont ouverts en dessous de ladite face inférieure (49) selon ledit axe (AX).

5. Dispositif de séparation et de collecte selon l'une quelconque des revendications 1 à 4,
**caractérisé en ce que** lesdits trous (46) dudit premier dispositif d'acheminement (41) sont positionnés entre ledit premier déflecteur (43) et ledit deuxième déflecteur (45).

6. Dispositif de séparation et de collecte selon l'une quelconque des revendications 1 à 3,
**caractérisé en ce que** lesdits trous (46) dudit premier dispositif d'acheminement (41) sont agencés dans ladite face supérieure (48) au moins en partie sous le deuxième déflecteur (45) selon ledit axe (AX).

7. Dispositif de séparation et de collecte selon l'une quelconque des revendications 1 à 5,
**caractérisé en ce que** ledit dispositif de séparation et de collecte (40) étant de forme annulaire autour d'un axe (AX), ledit deuxième déflecteur (45) est incliné par rapport à l'axe (AX), vers ledit axe (AX) en s'éloignant verticalement au-dessus de ladite face supérieure (48) selon ledit axe (AX).

8. Train épicycloïdal d'engrenages (10) comportant une roue planétaire (11) dentée, une couronne externe (12) dentée, un porte-satellites (20) et plusieurs roues-satellites (30) dentées portées par ledit porte-satellites (20), le porte-satellites (20) comportant un support (21) et plusieurs manetons (22) portés par ledit support (21), chaque roue-satellite (30) étant agencée autour d'un maneton (22), ledit train épicycloïdal d'engrenages (10) comportant un premier dispositif de guidage (25) en rotation dudit porte-satellites (20) et des seconds dispositifs de guidage (35) en rotation desdites roues-satellites (30), ledit premier dispositif de guidage (25) étant positionné dans un plan supérieur situé au-dessus d'un plan inférieur contenant lesdites roues-satellites (30), ledit train épicycloïdal d'engrenages (10) étant configuré pour être lubrifié par un premier flux et un deuxième flux d'un liquide de lubrification provenant d'un circuit de lubrification (50) et se dirigeant en direction dudit premier dispositif de guidage (25) et en direction desdits seconds dispositifs de guidage (35) en rotation,
**caractérisé en ce que** ledit train épicycloïdal d'engrenages (10) comporte un dispositif de séparation et de collecte (40) selon l'une quelconque des revendications 1 à 6, ledit premier flux (51) dudit liquide de lubrification se dirigeant en direction desdits seconds dispositifs de guidage (35) en rotation et ledit deuxième flux (52) dudit liquide de lubrification s'écoulant par gravité à partir dudit premier dispositif de guidage (25).

9. Train épicycloïdal d'engrenages selon la revendication 8,
**caractérisé en ce que** ledit premier dispositif d'acheminement (41) achemine ledit premier flux (51) au-dessus de chaque maneton (22) alors que ledit deuxième dispositif d'acheminement (42) dirige le deuxième flux (52) entre deux roues-satellites (30).

10. Train épicycloïdal d'engrenages selon la revendication 9,
**caractérisé en ce que** lesdits trous (46) débouchent sur ladite face inférieure (49) respectivement au-dessus desdits seconds dispositifs de guidage (35) selon ledit axe (AX)ou bien au-dessus d'un cercle formé par une bague intérieure desdits seconds dispositifs de guidage (35) selon ledit axe (AX).

11. Train épicycloïdal d'engrenages selon la revendication 9,
**caractérisé en ce que** lesdits trous (46) sont agencés à des azimuts correspondant auxdits seconds dispositifs de guidage (35) et lesdits canaux (44) sont agencés à des azimuts correspondant aux intervalles entre deux seconds desdits dispositifs de guidage (35) adjacents.

12. Train épicycloïdal d'engrenages selon l'une quelconque des revendications 8 à 11,
**caractérisé en ce que** ledit dispositif de séparation et de collecte (40) est porté par le porte-satellites (20) et solidaire en rotation dudit porte-satellites (20).

13. Train épicycloïdal d'engrenages selon l'une quelconque des revendications 8 à 12,
**caractérisé en ce que** ledit train épicycloïdal d'engrenages (10) comportant un axe de rotation (AXROT) d'au moins deux éléments parmi ladite roue planétaire (11), ladite couronne externe (12) dentée et ledit porte-satellites (20), ledit dispositif de séparation et de collecte (40) est centré sur ledit axe de rotation (AXROT),ledit porte-satellites (20) et ledit dispositif de séparation et de collecte (40) étant coaxiaux.

14. Boîte de transmission de puissance (6) comportant un train épicycloïdal d'engrenages (10) et un circuit de lubrification (50),
**caractérisée en ce que** ledit train épicycloïdal d'engrenages (10) est selon l'une quelconque des revendications 8 à 13.

15. Boîte de transmission de puissance (6) selon la revendication 14,
**caractérisée en ce que** ladite boîte de transmission de puissance (6) comporte un bâti (61), le premier dispositif de guidage (35) étant agencé entre ledit bâti (61) et ledit porte-satellites (20), ledit bâti (61) comportant un conduit (65) à travers lequel est acheminé ledit premier flux (51) dudit liquide de lubrification en direction desdits seconds dispositifs de guidage (35) en rotation.

16. Aéronef (1),
**caractérisé en ce que** ledit aéronef (1) comporte une boîte de transmission de puissance (6) selon l'une quelconque des revendications 14 à 15.
